(19) Europäisches Patentamt
European Patent Office
Office européen des brevets

(11) **EP 2 591 324 B1**

(12) **FASCICULE DE BREVET EUROPEEN**

(45) Date de publication et mention de la délivrance du brevet:
**15.04.2020 Bulletin 2020/16**

(21) Numéro de dépôt: **11730949.2**

(22) Date de dépôt: **04.07.2011**

(51) Int Cl.:
***G01J 9/00*** *(2006.01)*

(86) Numéro de dépôt international:
**PCT/EP2011/061181**

(87) Numéro de publication internationale:
**WO 2012/004213 (12.01.2012 Gazette 2012/02)**

(54) **ANALYSEUR DE FRONT D'ONDES A MICROLENTILLES A CRISTAL LIQUIDE**

WELLENFRONTANALYSATOR MIT FLÜSSIGKRISTALL-MIKROLINSEN

WAVE FRONT ANALYZER HAVING LIQUID-CRYSTAL MICROLENSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2010 FR 1002835**

(43) Date de publication de la demande:
**15.05.2013 Bulletin 2013/20**

(73) Titulaire: **Commissariat à l'Énergie Atomique et aux Énergies Alternatives 75015 Paris (FR)**

(72) Inventeur: **ROSSINI, Umberto F-38500 Coublevie (FR)**

(74) Mandataire: **Bréda, Jean-Marc et al Marks & Clerk France Conseils en Propriété Industrielle Immeuble " Visium " 22 Avenue Aristide Briand 94117 Arcueil Cedex (FR)**

(56) Documents cités:
• THIBOS LARRY N., BRADLEY ARTHUR: "Use of Liquid-Crystal Adaptive-Optics to Alter the Refractive State of the Eye", OPTOMETRY AND VISION SCIENCE, vol. 74, no. 7, 1 juillet 1997 (1997-07-01), pages 581-587, XP002626340,
• SEIFERT L ET AL: "The adaptive Shack-Hartmann sensor", OPTICS COMMUNICATIONS, NORTH-HOLLAND PUBLISHING CO. AMSTERDAM, NL, vol. 216, no. 4-6, 15 février 2003 (2003-02-15), pages 313-319, XP004409717, ISSN: 0030-4018, DOI: DOI:10.1016/S0030-4018(02)02351-9
• QUANQUAN MU ET AL: "Adaptive optics imaging system based on a high-resolution liquid crystal on silicon device", OPTICS EXPRESS, vol. 14, no. 18, 4 septembre 2006 (2006-09-04), pages 8013-8018, XP002626341,
• RHA J ET AL: "Reconfigurable Shack-Hartmann wavefront sensor", OPTICAL ENGINEERING, SOC. OF PHOTO-OPTICAL INSTRUMENTATION ENGINEERS, BELLINGHAM, vol. 43, no. 1, 1 January 2004 (2004-01-01), pages 251-256, XP003014535, ISSN: 0091-3286, DOI: 10.1117/1.1625950

**Description**

L'invention concerne les analyseurs de fronts d'onde optiques.

Un analyseur de front d'onde comporte un réseau de microlentilles convergentes qui subdivisent un front d'onde incident en de multiples faisceaux et qui focalisent chacune un faisceau en un point focal respectif. Un réseau de détecteurs photosensibles (matrice de capteurs CCD ou CMOS) est placé derrière le réseau de microlentilles pour détecter la position du point de focalisation pour chaque faisceau. Cette position dépend des déformations locales du front d'onde en regard de chaque microlentille.

De tels analyseurs de front d'onde sont utilisés notamment pour l'observation astronomique dans des télescopes ; par exemple, dans l'observation d'une étoile, l'atmosphère terrestre déforme le front d'onde plan émis par l'étoile et la déformation est mesurée ; les déformations détectées peuvent être utilisées pour corriger les aberrations et restituer un front d'onde plan.

On les utilise aussi pour faire des mesures ophtalmologiques en vue d'une correction ou d'une chirurgie réparatrice.

Les microlentilles utilisées dans ces analyseurs sont le plus souvent des lentilles de verre convergentes à focale fixe qui n'offrent pas de souplesse d'utilisation.

On a également proposé des analyseurs utilisant des réseaux de microlentilles programmables, c'est-à-dire qu'on peut ajuster des caractéristiques optiques des microlentilles en agissant sur des tensions électriques.

En particulier, on a proposé d'utiliser des réseaux de microlentilles formées à partir de matrices de pixels de cristaux liquides. L'article "Wavefront correction based on a reflective liquid crystal wavefront sensor" dans Journal of Optics A: Pure and Applied Optics 11 (2009) par L Hu, L Xuan, D Li, Z Cao, Q Mu, Y Liu, Z Peng, and X Lu, décrit une telle solution. Mais il repose sur une matrice à cristal liquide fonctionnant en réflexion, ce qui aboutit à une structure complexe pour l'analyseur. De plus, le réglage de la distance focale est difficile car il dépend très fortement de la longueur d'onde de la lumière incidente.

L'article de J. Rha et al. « Reconfigurable Shack-Harmann wavefron sensor », Opt. Eng. 43(1) 251 - 256 décrit un analyseur de front d'ondes reconfigurable à microlentilles à cristal liquide. Ces microlentilles sont des lentilles de Fresnel, présentant des sauts d'indice de réfraction. L'article de L.Thibos et al "Use of Liquid-Crystal Adaptive-Optics to Alter the Refractive State of the Eye", Optometry and Vision Science, vol.74, no.7, 1 juillet 1997, pages 581-587, divulgue un analyseur utilisant des réseaux de microlentilles programmables formées à partir de matrices de pixels de cristaux liquides.

L'invention a pour but de proposer un analyseur de front d'ondes plus efficace, plus simple à réaliser et à utiliser, et disposant d'une facilité d'ajustement de chaque microlentille individuelle, que ce soit en position, en taille, ou en focale.

Ainsi, l'invention a pour objet un analyseur de front d'onde optique comprenant un réseau de microlentilles convergentes pour subdiviser un front d'onde incident en multiples faisceaux et créer pour chaque faisceau un point de focalisation respectif, et un réseau de détecteurs sensibles à la lumière placé derrière le réseau de microlentilles pour détecter la position de ces points de focalisation, caractérisé en ce que le réseau de microlentilles est formé à partir d'une couche de cristal liquide fonctionnant en transmission et pourvue d'une matrice d'électrodes définissant des pixels de cristal liquide dont l'indice de réfraction est commandable par une tension individuellement appliquée chaque électrode, en ce que chaque microlentille convergente comprend un sous-ensemble de pixels de cristal liquide groupés dans une région constituant la microlentille, les pixels d'un sous-ensemble ayant leurs indices de réfraction qui varient radialement de manière monotone en s'éloignant d'un point central de la région jusqu'aux bords de la région.

Il n'y a pas de sauts importants d'indice de réfraction donc de saut de phase brusque dans les chemins optiques à l'intérieur d'une microlentille ; il n'y a que les petits sauts d'indice liés à la nature discrète des électrodes. Le rapport de l'épaisseur de cristal liquide par rapport à la taille des électrodes peut-être ajusté afin que les champs transverses rendent la variation d'indice quasi-continue. La microlentille fonctionne donc en mode réfractif et non diffractif.

Comme les microlentilles fonctionnent de manière réfractive, la distance focale ne varie avec la longueur d'onde que dans la mesure où le cristal liquide a une nature en partie dispersive ; dans l'article précité, les lentilles sont faites par des réseaux diffractifs et la distance focale est donc fortement dépendante de la longueur d'onde de la lumière.

L'indice du cristal liquide varie de manière monotone avec la tension appliquée au pixel, de sorte que le motif de tensions électriques appliquées aux pixels d'un sous-réseau varie lui aussi radialement de manière monotone en partant du centre jusqu'au bord d'une microlentille ; c'est le motif de tensions électriques et donc le motif de distribution des indices de réfraction de la couche de cristal liquide dans le sous-réseau de pixels composant une microlentille qui détermine les propriétés de la microlentille en dimensions, position, et distance focale.

La distribution des tensions appliquées aux électrodes présente N maximums définissant des points centraux de N microlentilles (N >1) et une variation monotone depuis un point central de microlentille jusqu'aux bords de la région dans toutes les directions. Les tensions sont décroissantes ou croissantes du centre vers les bords pour un cristal liquide nématique selon la nature et l'alignement du cristal liquide.

Le point central de la région qui correspond à un sous-ensemble et qui définit une microlentille individuelle est en principe un centre géométrique du sous-ensemble d'électrodes, mais on verra que dans des cas particuliers le point central peut être décalé par rapport au centre géométrique du sous-ensemble, lorsqu'on souhaite que le point de focalisation ne soit pas dans l'axe perpendiculaire à la couche de cristal liquide.

Le réseau de microlentilles est en principe constitué de microlentilles adjacentes les unes aux autres, c'est-à-dire que les bords de la région constituant une microlentille convergente sont adjacents aux bords de régions définissant d'autres microlentilles convergentes. On verra cependant qu'on peut prévoir, par une commande appropriée des tensions appliquées à la matrice, de séparer chaque microlentille convergente des autres microlentilles convergentes par des régions dépourvues de pouvoir de convergence ou ayant un pouvoir divergent.

Dans le cas d'un réseau de lentilles convergentes, si on appelle r la distance radiale d'un pixel au centre de la microlentille, F la distance focale désirée, E l'épaisseur du cristal liquide, on applique de préférence au pixel une tension telle que l'indice de réfraction moyen n(r) du pixel soit égal à $n = n_1 - r^2/2E.F$, où $n_1$ est l'indice au centre. Les tensions qu'il faut appliquer à un pixel pour obtenir une valeur d'indice déterminée sont déterminées à partir de la courbe de variation de l'indice moyen en fonction de la tension appliquée, et cette courbe dépend de la nature du cristal liquide et de son épaisseur. Pour une lentille divergente, la variation serait de préférence $n = n_1 + r^2/2E.F$.

Outre l'analyseur qui vient d'être résumé, l'invention a également pour objet un procédé pour analyser un front d'onde à partir d'un réseau de détecteurs photosensibles, et d'une couche de cristal liquide associée à une matrice d'électrodes et à des moyens d'application de tensions individuelles aux différentes électrodes, caractérisé en ce que

- le réseau de détecteurs est placé à une distance F derrière la couche de cristal liquide dans le sens de propagation du front d'onde vers la couche de cristal liquide,
- les tensions appliquées aux électrodes individuelles d'une région comprenant un sous-ensemble d'électrodes groupées autour d'un point central varient en fonction de la distance des électrodes à ce point central selon une courbe monotone,
- et le sous-ensemble est adjacent sur tous ses bords à d'autres sous-ensembles organisés et commandés de la même manière par des tensions variant selon une courbe monotone ;
- chaque sous-ensemble agit sur une lumière incidente collimatée pour la faire converger en un point focal situé à la distance F,
- on détecte à l'aide du réseau de détecteurs la position des points focaux des sous-ensembles.

Le nombre N de microlentilles, la position du centre de chaque microlentille, la taille des microlentilles, la distance focale, et même l'axe de focalisation de la lentille, sont ajustables en agissant sur le motif de tensions électriques appliquées aux électrodes de la matrice.

D'autres caractéristiques et avantages de l'invention apparaîtront à la lecture de la description détaillée qui suit et qui est faite en référence aux dessins annexés dans lesquels :

- la figure 1 représente un schéma du comportement réfractif d'une couche de cristal liquide présentant un gradient transversal d'indice dans le plan de la couche ;
- la figure 2 représente un schéma montrant qu'on peut réaliser une lentille convergente à partir d'une telle couche en établissant une variation transversale d'indice contrôlée dans le plan de la couche ;
- la figure 3 représente une courbe de correspondance entre la tension qu'il faut appliquer à un pixel et l'indice de réfraction moyen qui en résulte ;
- la figure 4 représente une série de courbes représentant le diamètre maximal d'une microlentille réfractive en fonction de la distance focale désirée, pour différentes épaisseur de cristal liquide ;
- la figure 5 représente le principe général d'un analyseur de front d'onde à réseau de microlentilles ;
- la figure 6 représente la constitution du réseau de microlentilles selon l'invention avec un diagramme de la distribution de tensions électriques appliquées aux électrodes de la matrice de pixels en fonction de leur position dans la matrice ;
- la figure 7 représente en vue de dessus un schéma de constitution de lentille hexagonale à partir d'un sous-réseau de 672 pixels ;
- la figure 8 représente des possibilités d'ajustement de la formation des microlentilles pour obtenir certains effets ;
- la figure 9 représente les étapes principales de la fabrication d'une matrice de pixels à cristal liquide fonctionnant en mode transmissif.

On rappelle d'abord le comportement de la lumière traversant un milieu présentant un gradient transversal d'indice de réfraction. Si le gradient d'indice était strictement dans la direction de la propagation de la lumière, il n'y aurait pas de modification de la direction de propagation. Mais si le gradient d'indice possède une composante transversale, perpendiculaire à la direction de propagation, cette direction de propagation tend à être modifiée, la trajectoire s'incurvant vers le côté d'indice le plus élevé ; le rayon de courbure R en un point donné est proportionnel à l'indice de réfraction n en ce point et inversement proportionnel à la composante transversale du gradient en ce point ; on peut l'exprimer par la formule :

$$\frac{1}{R} = \frac{1}{n}\,\overrightarrow{e_n}\cdot\overrightarrow{grad}(n)$$

$\overrightarrow{e_n}$ est le vecteur unitaire perpendiculaire en un point à la direction de propagation ; $\overrightarrow{grad}(n)$ est le vecteur de gradient d'indice. Le produit scalaire $\overrightarrow{e_n}\cdot\overrightarrow{grad}(n)$ représente la composante transversale du gradient, perpendiculairement à la propagation.

Il en résulte que si un rayon lumineux traverse une couche plane de cristal liquide dont l'indice de réfraction moyen varie transversalement dans le plan de la couche, les rayons sont déviés d'autant plus que le gradient est fort et d'autant plus que l'indice est faible. Par ailleurs, cette déviation est une courbure progressive du trajet de la lumière, de sorte que l'angle $\alpha$ entre la direction de propagation à l'entrée et la direction de propagation à la sortie dépend de l'épaisseur E de la couche de cristal liquide.

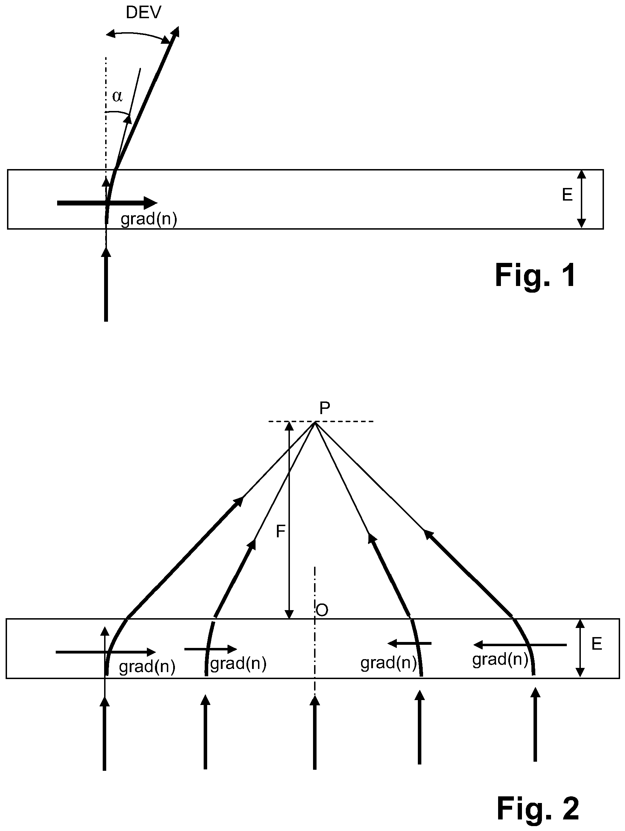

La figure 1 représente schématiquement la déviation d'un rayon engendrée par l'existence d'un gradient d'indice grad(n) dans le plan horizontal de la couche. Les distances et les angles sont exagérés pour mieux illustrer le phénomène.

Il faut noter qu'à la sortie de la couche, une déviation supplémentaire est produite en raison du changement d'indice lorsqu'on passe de l'intérieur à l'extérieur du cristal liquide. La déviation totale entre le trajet d'entrée (perpendiculaire à la couche) et le trajet de sortie est indiquée par l'angle DEV.

Si on simplifie les calculs pour donner une image intuitive du comportement, on peut dire que l'angle de déviation DEV entre le rayon entrant et le rayon sortant de la couche est sensiblement proportionnel à l'épaisseur E de la couche et au gradient transversal d'indice au point considéré. L'indice qui est considéré ici est l'indice moyen de la couche de cristal sur l'épaisseur de la couche de cristal, car l'indice n'est pas forcément constant dans le sens perpendiculaire à la couche.

La figure 2 montre comment on peut faire une lentille convergente si on sait contrôler en tout point de la couche le gradient transversal d'indice moyen du cristal liquide. On s'arrange pour produire un gradient fort à la périphérie de la zone de cristal agissant comme une lentille, et un gradient de plus en plus faible vers le centre. Les gradients différents grad(n) sont représentés avec des flèches de longueurs différentes. Les rayons lumineux sont donc plus déviés par la couche à la périphérie et moins déviés au centre. Le sens des gradients est tourné vers le centre de la lentille, c'est-à-dire que les indices croissent des bords vers le centre. Si les déviations (incluant la déviation de sortie de la couche qui dépend elle-même de l'indice local) sont calculées pour converger toutes vers un point focal P à une distance F de la lentille, on a réalisé une lentille convergente avec une couche plane de cristal liquide à gradient d'indice.

Le gradient d'indice moyen est contrôlé électriquement en imposant un indice moyen n désiré dans chaque zone élémentaire de la couche, l'indice variant en fonction de la position de cette zone par rapport au centre O de la lentille. L'indice est lui-même contrôlé par un champ électrique choisi qui modifie l'orientation des molécules du cristal liquide, ce qui produit un changement d'indice. Des électrodes individuelles juxtaposées, non représentées, peuvent recevoir des potentiels électriques individuels permettant d'appliquer des champs électriques désirés variant d'une électrode à l'autre. Ces électrodes ne peuvent pas être en nombre infini pour des raisons de réalisation technologiques. La couche est divisée par conséquent en un nombre fini de zones élémentaires individuellement contrôlables. On utilisera l'appellation de pixels pour ces zones par analogie avec les afficheurs à cristaux liquides qui sont constitués de cette manière avec un réseau d'électrodes individuelles délimitant les pixels de l'image à afficher.

Toujours en simplifiant les calculs, on peut montrer qu'on aboutit à former une lentille convergente si on sait donner à l'indice moyen des zones élémentaires de la couche une variation de la forme $n(r) = n_1 - r^2/2E.F$ en fonction de la distance radiale r entre le centre O de la lentille et la zone élémentaire. $n_1$ est l'indice au centre. C'est en effet avec une telle variation qu'on aboutit aux variations de gradient qui provoquent les déviations convergentes représentées à la figure 2. La répartition d'indices le long de la couche de cristal liquide dépend donc de l'épaisseur de la couche et de la focale désirée.

On pourrait faire de la même manière une lentille divergente en inversant le signe des gradients, c'est-à-dire en prévoyant que l'indice augmente en allant du centre vers les bords et non des bords vers le centre.

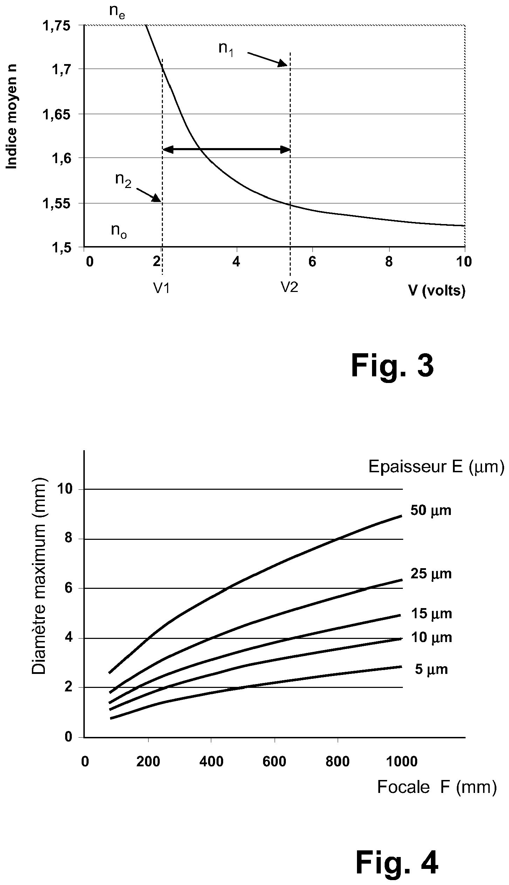

La figure 3 représente à titre d'exemple une courbe de correspondance entre la tension V appliquée perpendiculairement à la couche de cristal liquide et l'indice moyen n qui en résulte au point où cette tension est appliquée. L'indice varie entre deux valeurs extrêmes qui sont une valeur d'indice ordinaire $n_O$ et une valeur d'indice extraordinaire $n_e$. Cette courbe n'est qu'un exemple car elle dépend essentiellement de la réalisation technologique, de la nature du cristal liquide, de son épaisseur. Mais elle montre qu'on peut associer de manière biunivoque une tension à un indice et on peut donc déterminer, pour une couche de cristal liquide de nature et d'épaisseur déterminées, quel est le motif de tensions qu'il faut appliquer aux différents pixels en fonction de leur distance au centre pour obtenir l'indice désiré pour chaque pixel et former une lentille convergente (ou divergente).

Pour que le dispositif soit réalisable, il est souhaitable que l'on se place dans un domaine de tensions où une variation de tension produit effectivement une variation d'indice significative, c'est-à-dire pas trop vers le bas de la figure 3. Il faut également éviter de travailler au voisinage de la tension de seuil du cristal liquide car le temps de réaction de ce dernier augmente fortement lorsqu'on cherche à faire varier légèrement l'indice autour de cette tension. Enfin, on choisit l'épaisseur de cristal liquide en fonction des besoins de focales et de diamètre souhaité des microlentilles. La figure 4 représente des courbes illustrant la relation entre l'épaisseur de cristal liquide la focales et le diamètre souhaité des μlentilles. On choisit ainsi une épaisseur, une plage $n_1$, $n_2$ de variation d'indice acceptable, et une plage V1, V2 de tensions de commande correspondantes.

Dans l'exemple de courbe illustré pour un cristal liquide dont l'indice peut varier de dn=0,25 (de 1,5 à 1,75) on considère qu'on peut obtenir une plage de variation d'indices de 1,55 à 1,7 soit une variation d'indice dn de 0,15 avec des tensions de 2 à 6 volts pour une épaisseur de cristal liquide de 10 micromètres. La limitation à n inférieur à 1,70 permet de garder une vitesse de réaction correcte et la limitation n supérieur à 1,55 permet de garder une tension de fonctionnement raisonnable.

Les lentilles proposées dans l'art antérieur sur ce principe d'une commande d'indice de cristal liquide par un réseau d'électrodes sont des lentilles diffractives. Elles sont configurées avec des zones successives dans lesquelles les chemins optiques subissent des sauts de phase brusques de $2\pi$ à l'endroit de la transition entre deux zones successives. Une des raisons pour lesquelles des lentilles diffractives sont utilisés est le fait qu'elles permettent de choisir à volonté et indépendamment l'une de l'autre une valeur de diamètre de la lentille et une valeur de convergence (ou distance focale) désirée. Les lentilles diffractives fondées sur l'utilisation de cristaux liquides présentent non seulement des sauts de phase mais des sauts d'indices de réfraction ; elles sont difficilement réalisables autrement qu'avec des électrodes en formes d'anneaux concentriques de largeur radiale décroissante, à la manière de lentilles de Fresnel, comme cela apparaît par exemple dans l'article "Switchable electro-optic diffractive lens with high efficiency for ophthalmic applications" de Guoqiang Li, David L. Mathine, Pouria Valley, Pekka Ayras et autres dans O+PNAS avril 18 2006, vol 103 N°16. De ce fait, leur géométrie est figée par la géométrie des électrodes.

Selon l'invention, dans une application d'analyseur de front d'onde à réseau de microlentilles, on a trouvé qu'il était préférable de ne pas utiliser de lentilles diffractives. D'une part, les lentilles diffractives ont le défaut d'avoir une distance focale qui dépend de la longueur d'onde, et d'autre part elles nécessiteraient pour être efficaces des électrodes en anneaux concentriques. On a constaté que, contrairement à d'autres applications telles que la correction ophtalmologique, l'application à un analyseur de front d'onde autorise l'utilisation de diamètres de microlentilles de quelques centaines de micromètres de diamètre, pour des focales de quelques millimètres. Ces microlentilles peuvent être des microlentilles fonctionnant de manière réfractive et non diffractive.

C'est pourquoi, on propose de former dans une matrice de pixels à cristal liquide un ensemble de microlentilles dont la particularité est qu'elles ont chacune un profil d'indice variant radialement de manière monotone entre le centre de la microlentille et les bords de la microlentille. Ces lentilles travaillent en mode réfractif et non en mode diffractif. Par ailleurs, les microlentilles sont utilisées en mode transmissif, le mode réflectif n'étant pas bien adapté à l'application d'analyse de front d'onde en raison du fait qu'il nécessite des miroirs et optiques secondaires entre le réseau de microlentilles et le capteur d'image qui sert à détecter les points de focalisation du front d'onde après passage dans le réseau de microlentilles.

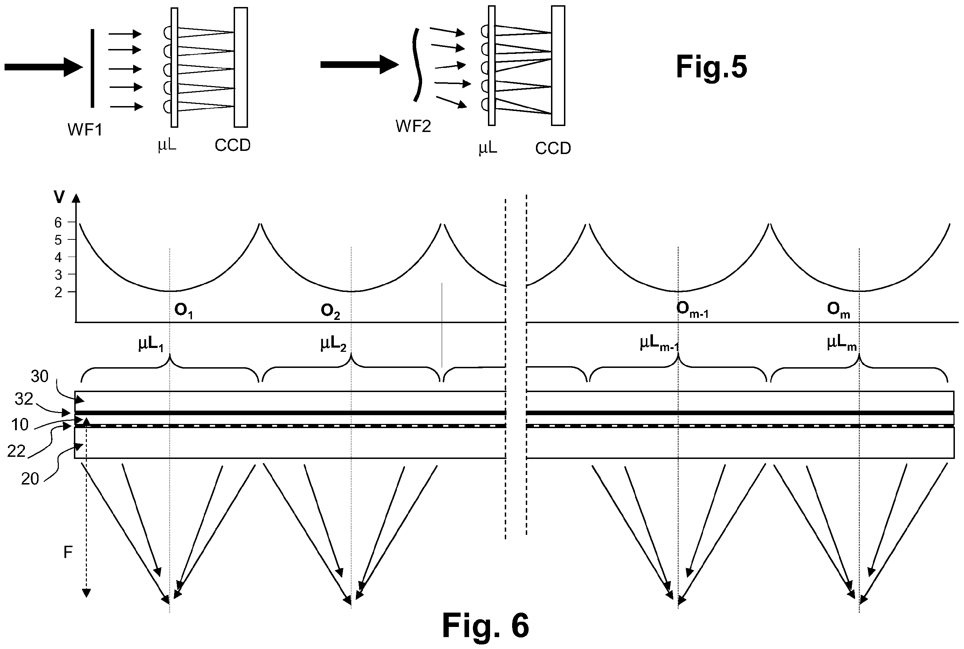

La figure 5 représente le principe général d'un analyseur de front d'onde à microlentilles transmissives ; dans l'art antérieur les lentilles d'un tel analyseur étaient en général en verre. De tels analyseurs sont utilisés pour la mesure en ophtalmologie (mesure de défauts de l'œil) et pour l'observation spatiale, pour la mise au point d'optiques. Dans l'observation spatiale on se sert des mesures de front d'onde effectuées pour corriger les aberrations dues aux déformations de fronts d'onde ; les déformations sont dues notamment au passage de rayons lumineux à travers des couches atmosphériques.

La partie gauche de la figure 5 montre le fonctionnement de l'analyseur en présence d'un front d'onde plan ; la partie droite montre ce fonctionnement lorsque le front d'onde est déformé. Le faisceau de lumière incident avec un front d'onde plan WF1 passe à travers un réseau de microlentilles juxtaposées ($\mu$L); les microlentilles subdivisent le faisceau en de multiples sous-faisceaux et focalisent chacune un sous-faisceau respectif sur un capteur d'image électronique (de technologie CCD ou CMOS). Les microlentilles sont réparties selon un réseau géométrique régulier de sorte que les points de focalisation sont répartis selon un réseau régulier sur le capteur d'image.

Lorsqu'un faisceau de lumière arrive avec un front d'onde non plan WF2 (sur la partie droite de la figure 5), les points de focalisation de chaque microlentille sont déplacés en fonction de l'inclinaison locale du front d'onde devant chaque microlentille. Le capteur d'image fournit l'image d'un réseau irrégulier de taches de focalisation. La déformation du réseau de taches de focalisation dépend de la déformation du front d'onde en chacun de ses points. Elle permet de reconstituer la forme du front d'onde.

La figure 6 représente en coupe le réseau de microlentilles réalisé selon l'invention. Il est fabriqué de préférence par des technologies dites LCOS ("liquid cristal on silicon", ou cristal liquide sur silicium), c'est-à-dire des technologies de microélectronique utilisées pour les circuits intégrés dans lesquels on traite collectivement des tranches de silicium avant de les découper en puces individuelles.

Le réseau de microlentilles comprend une couche de cristal liquide 10 d'épaisseur E entre deux plaques transparentes (plaques de verre) 20 et 30. La plaque 20 comprend un réseau matriciel d'électrodes 22 commandables individuellement et les circuits de commande de ces électrodes. L'autre plaque 30 porte une contre-électrode 32 définissant un potentiel de référence zéro. Les électrodes de la matrice et la contre-électrode sont transparentes pour que le réseau de microlentilles puisse fonctionner en transmission selon le schéma de la figure 5. Elles sont de préférence en oxyde d'indium-étain (ITO).

On a représenté sur la partie supérieure de la figure 6 la distribution de tensions qu'il faut appliquer aux électrodes individuelles de la matrice pour aboutir à la formation d'un réseau de microlentilles convergentes. La distribution de tensions est représentée sous forme d'une courbe lissée, mais en réalité il s'agit d'une courbe en escalier dont le pas correspond au pas des électrodes individuelles de la matrice. Le profil de tension lissé le long de la coupe comprend une succession de courbes en cloche (retournée sommet en bas) dont les sommets définissent les centres $O_1$, $O_2$, ...$O_{m-1}$, $O_m$ des différentes microlentilles $\mu L_1$, $\mu L_2$, ...$\mu L_{m-1}$, $\mu L_m$.

Sur la figure, les microlentilles sont représentées comme toutes identiques et adjacentes. Mais dans l'utilisation de l'analyseur de front d'onde on peut décider que les microlentilles ne sont pas toutes identiques (pour corriger des défauts) ou qu'elles sont séparées les unes des autres par des espaces sans fonction convergente, ou qu'une lentille sur deux est divergente (lorsqu'on veut réduire le pas des microlentilles effectivement utilisées par l'analyseur), etc. Par exemple, on prévoit d'appliquer aux pixels d'autres sous-ensembles, formant des microlentilles divergentes, une tension telle que l'indice de réfraction moyen du pixel soit égal à $n_1 + r^2/2E.F$, où $n_1$ est l'indice du cristal liquide au point central d'une microlentille, r est la distance radiale du pixel à ce point central, F la distance focale désirée, E l'épaisseur du cristal liquide.

La position du centre de chaque microlentille est commandable à volonté puisqu'elle est définie par le sommet des différentes courbes en cloche. La convergence de la microlentille est définie par la forme de la courbe en cloche conformément à ce qui a été expliqué ci-dessus : la formule simplifiée qui décrit la variation monotone de l'indice de réfraction n en fonction de la distance r au centre d'une microlentille est $n = n_1 - r^2/2E.F$, où $n_1$ est l'indice au centre, E l'épaisseur de la couche, et F la distance focale souhaitée. Cette variation monotone s'exerce dans toutes les directions, d'où la forme en cloche de cette variation d'indice le long d'un diamètre de la microlentille et d'où également la forme en cloche de la variation de tension correspondante représentée à la figure 6.

Le diamètre de la microlentille est défini par la base de la courbe en cloche. Ce diamètre est limité par la gamme d'indices qui peut être obtenue entre la tension à la base de la courbe et la tension au sommet. Si l'indice peut varier d'une valeur maximale $dn_{max}$, le diamètre maximum d'une microlentille sera égal à $2 \times (2 \times dn_{max} E.F)^{1/2}$. Par exemple si $dn_{max} = 0,15$, si $E = 10$ micromètres, et si la focale désirée est de 10 mm, le diamètre maximal d'une microlentille sera d'environ 350 micromètres.

La microlentille n'est pas nécessairement circulaire ; par conséquent, quand on parle de diamètre maximal, il peut s'agir de la diagonale maximale d'un carré. La microlentille n'a pas nécessairement un diamètre égal au diamètre maximal.

Dans la pratique, on utilisera soit des microlentilles carrées soit des microlentilles hexagonales, ce qui permet d'utiliser tous les pixels de la matrice lorsqu'on veut un réseau de microlentilles toutes adjacentes les unes aux autres ; des microlentilles circulaires laisseraient des pixels inutilisés dans les espaces entre microlentilles. L'hexagone est une figure géométrique qui permet de se rapprocher du cercle avec une bonne approximation sans laisser d'espace inutilisé entre hexagones adjacents.

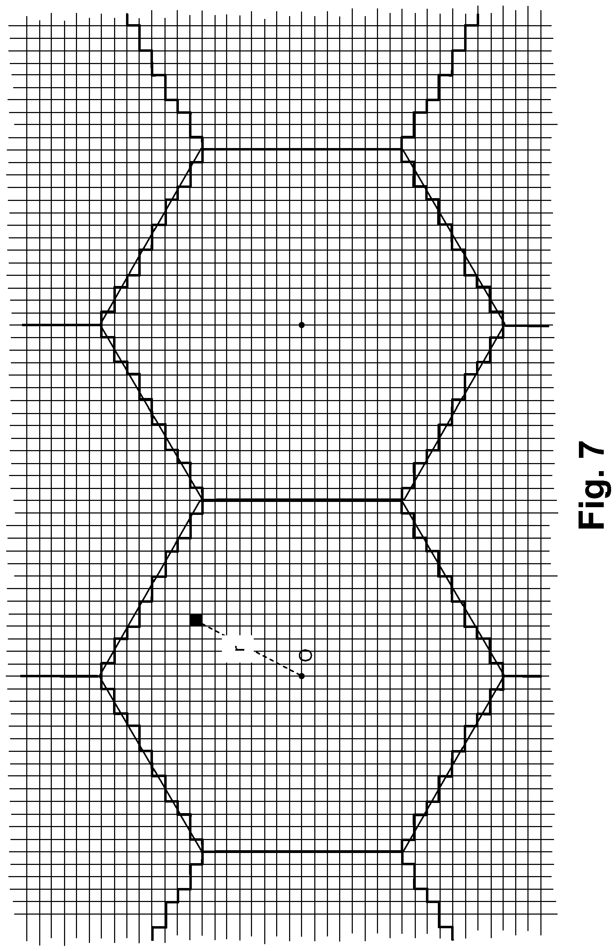

La figure 7 représente en vue de dessus une configuration de microlentilles (obtenue par l'application d'un profil de tension correspondant aux explications données plus haut) de forme hexagonale, adjacentes les unes aux autres. La matrice possède des pixels de $10 \mu m \times 10 \mu m$. Chaque microlentille a un diamètre d'environ 320 $\mu m$, ce qui est compatible avec une plage d'indice de 0,15 pour une épaisseur de cristal liquide de 10 micromètres (pouvant être commandé par des tensions de 2 à 6 volts) et une distance focale d'environ 10 mm. Il y a 672 pixels dans une microlentille et de 28 à 32 pixels dans un diamètre, donc de 28 à 32 valeurs de tensions pour établir la distribution d'indices désirés dans la courbe en cloche qui définit cette microlentille. Si la matrice à cristaux liquide est une matrice de plusieurs centaines de pixels en ligne et plusieurs centaines de pixels en colonne, on peut facilement réaliser un réseau de 100 à 200 microlentilles sur la matrice, ce qui est satisfaisant pour un analyseur de front d'onde. Une matrice de 600x800 pixels permettrait de loger 24x28 microlentilles convergentes adjacentes les unes aux autres.

Il est possible également, pour les applications qui ne requièrent pas une fréquence d'analyse trop élevée, d'accroître la précision d'analyse en multipliant le nombre de microlentilles, chaque pixel pouvant servir de centre pour une microlentille. Dans ce cas, les microlentilles se chevauchent les unes les autres et peuvent être adressées par exemple séquentiellement par paquets de microlentilles non chevauchantes.

On peut montrer que si on utilise une microlentille de diamètre maximal autorisé avec la courbe de tensions en cloche (compte-tenu de la plage d'indices utilisable), le nombre de Fresnel de cette microlentille est proportionnel à l'épaisseur de cristal liquide et à la plage d'indices utilisée.

On peut souhaiter que le nombre de Fresnel soit plus ou moins grand. Selon qu'on recherche une plus ou moins grande précision de focalisation, une plus ou moins longue focale, une plus ou moins grande rapidité de commande de la matrice, on adaptera les choix d'épaisseur de cristal liquide, de plage d'indice utilisée, de diamètre de la microlentille. Par exemple une épaisseur plus grande permet des focales plus courtes, mais au détriment de la vitesse de réaction du cristal liquide. Par ailleurs, une épaisseur trop faible aboutit à une "pixellisation" plus prononcée des variations d'indice (marches d'escalier de la courbe de variation quand on passe d'une électrode à la suivante), alors qu'une épaisseur plus importante tend à lisser les variations et établit des gradients plus conformes à ce que l'on souhaite pour réaliser la fonction de convergence.

Etant donné que les gradients d'indice permettent de régler l'inclinaison des rayons en tous points, on peut utiliser la matrice pour effectuer des ajustements supplémentaires. Ces ajustements consistent à modifier un peu la courbe en cloche pour la rendre dissymétrique et ainsi décaler le point focal de la lentille par rapport à l'axe de symétrie géométrique central du sous-ensemble de pixels qui forme la microlentille.

Cela permet par exemple de décaler latéralement d'une même distance les points de focalisation de toutes les microlentilles ; cela peut être utile si on veut ajuster électriquement l'alignement de la matrice de microlentilles par rapport au capteur d'image de l'analyseur. Dans ce cas, les courbes en cloche ont des formes dissymétriques qui sont toutes les mêmes et les points de focalisation sont tous décalés latéralement d'une même quantité par rapport à l'axe de symétrie des microlentilles.

On peut aussi dissymétriser de manière variable les courbes en cloche des différentes microlentilles. Dans un exemple, la courbe en cloche d'une microlentille située au centre de la matrice est symétrique et les courbes des autres microlentilles sont de plus en plus dissymétriques au fur et à mesure qu'on s'éloigne de la microlentille centrale. Cela permet par exemple de constituer un réseau de points de focalisation plus espacés que l'espacement des centres des microlentilles.

D'une manière générale, dans les cas où on fait des ajustements de ce type, le point central de la microlentille convergente, c'est-à-dire le point qui correspond au sommet de la courbe en cloche, n'est pas le centre géométrique du sous-ensemble de pixels qui constitue la microlentille.

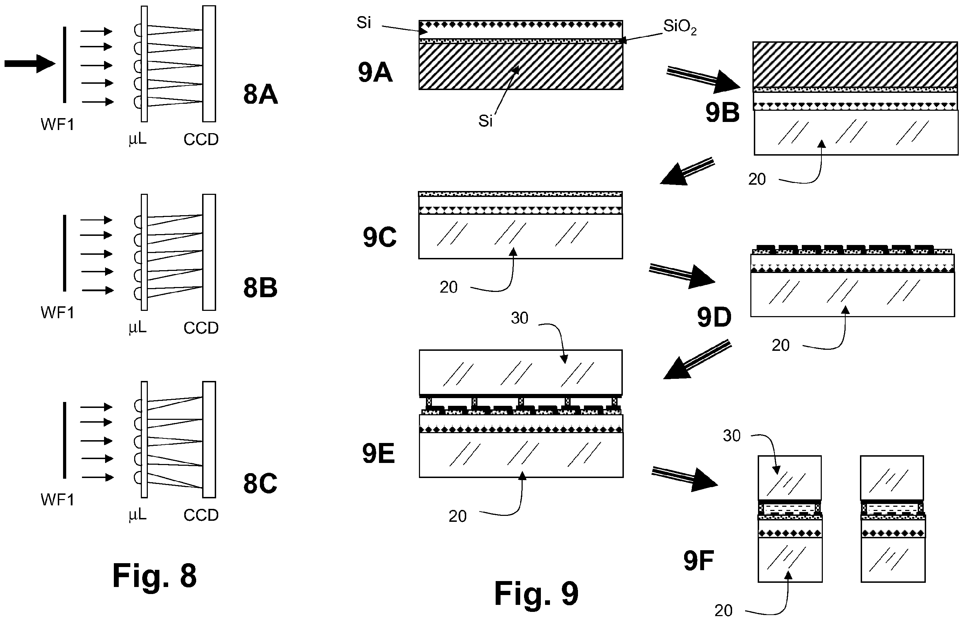

La figure 8 (A, B, C) illustre symboliquement ces ajustements possibles des fonctions de convergence des différentes microlentilles : 8A sans ajustement particulier ; 8B avec décalage de l'alignement ; 8C avec modification du pas du réseau de points focaux par rapport au pas des microlentilles. On a désigné par "CCD" le réseau de détecteurs photosensibles, placé en aval de la matrice de pixels transmissive, qui permet de détecter les variations de position des points de focalisation des différentes microlentilles en cas de déformation du front d'onde de la lumière incidente.

La matrice de pixels est de préférence réalisée de la manière suivante, illustrée par la figure 9.

On part d'une tranche de silicium, de préférence de type SOI (silicium sur isolant), c'est-à-dire un substrat de silicium recouvert sur sa face avant d'une fine couche d'oxyde de silicium elle-même recouverte d'une fine couche épitaxiale de silicium de quelques micromètres d'épaisseur. La fabrication est collective pour un ensemble de matrices mais on s'intéressera à une seule matrice. On réalise dans la couche épitaxiale, par la face avant de celle-ci, une matrice de pixels actifs comme on le ferait pour un afficheur de technologie LCOS, avec des transistors et capacités de commande, et les interconnexions nécessaires (figure 9A).

On reporte la tranche par sa face avant contre la face avant d'une plaque de verre 20 (figure 9B).

On élimine par la face arrière de la tranche tout le substrat de silicium jusqu'à mettre à nu la fine couche d'oxyde. Cette élimination se fait par usinage mécanique et/ou chimique (figure 9C).

Il subsiste sur la plaque de verre 20 une fine couche épitaxiale de silicium dans laquelle a été formée toute l'électronique de commande des pixels et les électrodes et dont la face arrière est recouverte de la fine couche d'oxyde du substrat SOI.

On effectue un traitement de face arrière comprenant la formation de vias conducteurs à travers cette couche d'oxyde pour accéder aux couches d'interconnexion, puis le dépôt et la gravure d'un réseau d'électrodes individuelles (figure 9D).

On assemble alors la tranche par cette face arrière contre une deuxième plaque de verre 30 qui porte une contre-électrode, en prévoyant un espacement fixe entre les deux plaques (figure 9E). Cet espacement définira l'épaisseur désirée E pour le cristal liquide.

Enfin, on découpe la tranche en puces individuelles et on remplit l'espace entre les plaques de verre avec du cristal liquide 10 (figure 9F).

L'ensemble est monté dans un boîtier de support permettant de relier la matrice à l'extérieur.

On remarquera que la matrice de pixels tend à induire de la diffraction indésirable, ceci parce qu'elle constitue un réseau régulier de zones transparentes et opaques au pas des pixels. Cette diffraction peut faire apparaître sur le réseau de détecteurs des points lumineux parasites qui ne sont pas véritablement les points focaux dont les positions sont représentatives du front d'onde. Pour limiter au mieux cette diffraction parasite, il est souhaitable de prévoir que les pixels de la matrice ont plusieurs configurations différentes, c'est-à-dire qu'ils ne sont pas tous identiques, et que les configurations différentes sont distribuées d'une manière pseudo-aléatoire dans la matrice. Ainsi, même si les pixels sont disposés avec un pas régulier, le fait qu'ils aient plusieurs configurations différentes réduit les pics de diffraction dus à la régularité du pas.

Par exemple, le transistor de commande associé à chaque pixel pour la commande du cristal liquide peut être placé en différentes positions du pixel : en bas à gauche, en bas à droite, en haut à gauche, en haut à droite, en bas au milieu, etc. Ces positions différentes sont distribuées irrégulièrement (pseudo-aléatoirement) dans la matrice. Le fait que le transistor constitue une zone opaque du pixel et qu'il ait une position différente contribue à réduire les pics de diffraction.

**Revendications**

1. Analyseur de front d'onde optique comprenant un réseau de microlentilles convergentes ($\mu$L) pour subdiviser un front d'onde incident en multiples faisceaux et créer pour chaque faisceau un point focal respectif, et un réseau de détecteurs sensibles à la lumière placé derrière le réseau de microlentilles pour détecter la position de ces points focaux, **caractérisé en ce que** le réseau de microlentilles est formé à partir d'une couche de cristal liquide (10) fonctionnant en transmission et pourvue d'une matrice d'électrodes (22) définissant des pixels de cristal liquide dont l'indice de réfraction est commandable par une tension individuellement appliquée chaque électrode, **en ce que** chaque microlentille convergente comprend un sous-ensemble de pixels groupés dans une région constituant la microlentille, les pixels d'un sous-ensemble ayant leurs indices qui varient radialement de manière monotone en s'éloignant d'un point central de la région jusqu'aux bords de la région pour que la microlentille fonctionne en mode réfractif.

2. Analyseur de front d'onde selon la revendication 1, **caractérisé en ce que** la distribution des tensions appliquées aux électrodes présente N maximums définissant des points centraux de N microlentilles (N >1) et une variation radiale monotone depuis un point central de chaque microlentille jusqu'aux bords de la région.

3. Analyseur selon la revendication 2, **caractérisé en ce que** les tensions appliquées sont croissantes du centre vers les bords.

4. Analyseur selon l'une des revendications 1 à 3, **caractérisé en ce que** le point central est un centre géométrique du sous-ensemble d'électrodes.

5. Analyseur selon l'une des revendications 1 à 3, **caractérisé en ce que** le point central est décalé par rapport à un centre géométrique du sous-ensemble d'électrodes.

6. Analyseur selon l'une des revendications 1 à 5, **caractérisé en ce que** les bords de la région constituant une microlentille convergente sont adjacents aux bords de régions définissant d'autres microlentilles.

7. Analyseur selon l'une des revendications 1 à 5, **caractérisé en ce que** les régions définissant les microlentilles convergentes sont adjacentes à des régions divergentes ou sans pouvoir de convergence.

8. Analyseur selon l'une des revendications 1 à 7, **caractérisé en ce que** les pixels de la matrice ont plusieurs configurations différentes, et que les configurations différentes sont distribuées d'une manière pseudo-aléatoire dans la matrice.

9. Procédé pour analyser un front d'onde à partir d'un réseau de détecteurs photosensibles, d'une couche de cristal liquide associée à une matrice d'électrodes et à des moyens d'application de tensions individuelles aux différentes électrodes, **caractérisé en ce que**

   - le réseau de détecteurs est placé à une distance F derrière la couche de cristal liquide dans le sens de propagation du front d'onde vers la couche de cristal liquide,
   - les tensions appliquées aux électrodes individuelles d'une région comprenant un sous-ensemble d'électrodes groupées autour d'un point central varient en fonction de la distance des électrodes à ce point central selon une courbe monotone,
   - et le sous-ensemble est adjacent sur tous ses bords à d'autres sous-ensembles organisés et commandés de la même manière par des tensions variant selon une courbe monotone ;
   - chaque sous-ensemble agit sur une lumière incidente collimatée pour la faire converger en un point focal situé à la distance F,
   - on détecte à l'aide du réseau de détecteurs la position des points focaux des sous-ensembles.

10. Procédé selon la revendication 9, **caractérisé en ce que** l'on applique à un pixel une tension telle que l'indice de réfraction moyen du pixel soit égal à $n_1 - r^2/2E.F$, où $n_1$ est l'indice du cristal liquide au point central d'une microlentille, r est la distance radiale du pixel à ce point central, F la distance focale désirée, E l'épaisseur du cristal liquide.

11. Procédé selon la revendication 10, **caractérisé en ce que** l'on applique aux pixels d'autres sous-ensembles formant des microlentilles divergentes une tension telle que l'indice de réfraction moyen du pixel soit égal à $n_1 + r^2/2E.F$, où $n_1$ est l'indice du cristal liquide au point central d'une microlentille, r est la distance radiale du pixel à ce point central, F la distance focale désirée, E l'épaisseur du cristal liquide.

**Patentansprüche**

1. Optischer Wellenfrontanalysator, beinhaltend ein Netzwerk konvergierender Mikrolinsen ($\mu$L) zum Unterteilen einer einfallenden Wellenfront in multiple Strahlen und zum Erzeugens eines jeweiligen Brennpunktes für jeden Strahl, und ein Netzwerk von lichtempfindlichen Detektoren, welches hinter dem Netzwerk von Mikrolinsen platziert ist, um die Position dieser Brennpunkte zu erkennen, **dadurch gekennzeichnet, dass** das Netzwerk von Mikrolinsen anhand einer Schicht von Flüssigkristall (10) gebildet ist, welches in Transmission arbeitet und mit einer Elektrodenmatrix (22) versehen ist, welche Flüssigkristallpixel definiert, deren Brechungsindex durch eine an jede Elektrode angelegte Spannung individuell steuerbar ist, und dadurch, dass jede konvergierende Mikrolinse eine Teilgruppe von Pixeln beinhaltet, welche in einem Bereich gruppiert ist, welcher die Mikrolinse bildet, wobei die Pixel einer Teilgruppe Brechungsindizes umfassen, die in Radialrichtung monoton variieren, je weiter sie sich von einem Mittelpunkt des Bereichs zu den Rändern des Bereichs entfernen, damit die Mikrolinse im Brechungsmodus arbeitet.

2. Wellenfrontanalysator nach Anspruch 1, **dadurch gekennzeichnet, dass** die Verteilung der an die Elektroden angelegten Spannungen N Höchstwerte aufweist, welche Mittelpunkte von N Mikrolinsen (N > 1) und eine monotone radiale Variation von einem Mittelpunkt einer jeden Mikrolinse bis zu den Rändern des Bereichs definiert.

3. Analysator nach Anspruch 2, **dadurch gekennzeichnet, dass** die angelegten Spannungen vom Mittelpunkt in Richtung der Ränder ansteigen.

4. Analysator nach einem der Ansprüche 1 bis 3, **dadurch gekennzeichnet, dass** der Mittelpunkt ein geometrisches Zentrum der Elektrodenteilgruppe ist.

5. Analysator nach einem der Ansprüche 1 bis 3, **dadurch gekennzeichnet, dass** der Mittelpunkt in Bezug auf ein geometrisches Zentrum der Elektrodenteilgruppe verschoben ist.

6. Analysator nach einem der Ansprüche 1 bis 5, **dadurch gekennzeichnet, dass** die Ränder des Bereichs, welcher eine konvergierende Mikrolinse bildet, an Ränder von Bereichen angrenzen, welche andere Mikrolinsen definieren.

7. Analysator nach einem der Ansprüche 1 bis 5, **dadurch gekennzeichnet, dass** die Bereiche, welche die konvergierenden Mikrolinsen definieren, an divergierende Bereiche oder Bereiche ohne Konvergenzvermögen angrenzen.

8. Analysator nach einem der Ansprüche 1 bis 7, **dadurch gekennzeichnet, dass** die Pixel der Matrix mehrere unterschiedliche Konfigurationen haben, und dass die unterschiedlichen Konfigurationen in pseudowillkürlicher Weise in der Matrix verteilt sind.

9. Verfahren zur Analyse einer Wellenfront anhand eines Netzwerks von lichtempfindlichen Detektoren, einer Schicht aus Flüssigkristall, welche einer Elektrodenmatrix und Mitteln zum Anlegen individueller Spannungen an unterschiedliche Elektroden zugeordnet ist, **dadurch gekennzeichnet, dass**:

- das Netzwerk von Detektoren in einem Abstand F hinter der Flüssigkristallschicht in der Fortpflanzungsrichtung der Wellenfront in Richtung der Flüssigkristallschicht platziert ist,
- die an die individuellen Elektroden eines Bereichs angelegten Spannungen, welcher eine um einen Mittelpunkt gruppierte Teilgruppe von Elektroden beinhaltet, angesichts des Abstandes der Elektroden zu diesem Mittelpunkt entlang einer monotonen Kurve variieren,
- und die Teilgruppe an all ihren Rändern an andere Teilgruppen angrenzt, welche in gleicher Weise organisiert sind und durch Spannungen gesteuert werden, welche entlang einer monotonen Kurve variieren;
- jede Teilgruppe auf das einfallende, kollimierte Licht einwirkt, um es an einem in dem Abstand F befindlichen Brennpunkt zum Konvergieren zu veranlassen,
- man mithilfe des Netzwerks von Detektoren die Position der Brennpunkte der Teilgruppen erkennt.

10. Verfahren nach Anspruch 9, **dadurch gekennzeichnet, dass** man an einen Pixel eine solche Spannung angelegt, dass der durschnittliche Brechungsindex des Pixels gleich $n_1 - r^2/2E.F$ ist, wobei $n_1$ der Index des Flüssigkristalls am Mittelpunkt einer Mikrolinse ist, r der radiale Abstand des Pixels zu diesem Mittelpunkt ist, F die gewünschte Brennweite ist, E die Dicke des Flüssigkristalls ist.

11. Verfahren nach Anspruch 10, **dadurch gekennzeichnet, dass** man an die Pixel anderer Teilgruppen, welche divergierende Mikrolinsen bilden, eine solche Spannung angelegt, dass der durchschnittliche Brechungsindex des Pixels gleich $n_1 + r^2/2E.F$ ist, wobei $n_1$ der Index des Flüssigkristalls am Mittelpunkt einer Mikrolinse ist, r der radiale Abstand des Pixels zu diesem Mittelpunkt ist, F die gewünschte Brennweite ist, E die Dicke des Flüssigkristalls ist.

## Claims

1. An optical wavefront analyser comprising an array of convergent microlenses ($\mu$L) for subdividing an incident wavefront into multiple beams and for creating a respective focal point for each beam, and an array of light-sensitive detectors placed behind the array of microlenses to detect the position of these focal points, **characterised in that** the array of microlenses is formed from a liquid crystal layer (10) operating by transmission and provided with a matrix of electrodes (22) defining liquid crystal pixels, the refractive index of which can be controlled by a voltage individually applied to each electrode, **in that** each convergent microlens comprises a subset of pixels grouped into a region forming the microlens, the pixels of a subset having indices that radially vary in a monotone manner by moving away from a central point of the region up to the edges of the region so that the microlens operates in refractive mode.

2. The wavefront analyser as claimed in claim 1, **characterised in that** the distribution of the voltages applied to the electrodes has N maximums defining central points of N microlenses (N > 1) and a monotone radial variation from a central point of each microlens up to the edges of the region.

3. The analyser as claimed in claim 2, **characterised in that** the applied voltages increase from the centre towards the edges.

4. The analyser as claimed in one of claims 1 to 3, **characterised in that** the central point is a geometric centre of the subset of electrodes.

5. The analyser as claimed in one of claims 1 to 3, **characterised in that** the central point is offset relative to a geometric centre of the subset of electrodes.

6. The analyser as claimed in one of claims 1 to 5, **characterised in that** the edges of the region forming a convergent microlens are adjacent to the edges of regions defining other microlenses.

7. The analyser as claimed in one of claims 1 to 5, **characterised in that** the regions defining the convergent microlenses are adjacent to regions that are divergent or lacking convergence power.

8. The analyser as claimed in one of claims 1 to 7, **characterised in that** the pixels of the matrix have multiple different configurations, and **in that** the different configurations are distributed in the matrix in a pseudo-random manner.

9. A method for analysing a wavefront from an array of light-sensitive detectors, a liquid crystal layer associated with a matrix of electrodes and with means for applying individual voltages to the various electrodes, **characterised in that**:

   - the array of detectors is placed at a distance F behind the liquid crystal layer in the direction of propagation of the wavefront towards the liquid crystal layer;

   - the voltages applied to the individual electrodes of a region comprising a subset of electrodes grouped around a central point vary in accordance with the distance of the electrodes to this central point along a monotone curve; and
   - the subset is adjacent, over all its edges, to other subsets organised and controlled in the same manner by voltages varying along a monotone curve;
   - each subset acts on a collimated incident light so as to converge the light at a focal point located at the distance F;
   - the position of the focal points of the subsets is detected using the array of detectors.

10. The method as claimed in claim 9, **characterised in that** a voltage is applied to a pixel such that the average refractive index of the pixel is equal to $n_1 - r^2/2E.F$, where $n_1$ is the index of the liquid crystal at the central point of a microlens, r is the radial distance of the pixel to this central point, F is the desired focal distance, E is the thickness of the liquid crystal.

11. The method as claimed in claim 10, **characterised in that** a voltage is applied to the pixels of other subsets forming divergent microlenses, such that the average refractive index of the pixel is equal to $n_1 + r^2/2E.F$, where $n_1$ is the index of the liquid crystal at the central point of a microlens, r is the radial distance of the pixel to this central point, F is the desired focal distance, E is the thickness of the liquid crystal.

**Fig. 1**

**Fig. 2**

## Fig. 3

## Fig. 4

Fig.5

Fig. 6

Fig. 7

Fig. 8

Fig. 9

EP 2 591 324 B1

EP 2 591 324 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L HU ; L XUAN ; D LI ; Z CAO ; Q MU ; Y LIU ; Z PENG ; X LU.** Wavefront correction based on a reflective liquid crystal wavefront sensor. *Journal of Optics A: Pure and Applied Optics,* 2009, 11
- **J. RHA et al.** Reconfigurable Shack-Harmann wavefron sensor. *Opt. Eng.,* vol. 43 (1), 251-256
- **L.THIBOS et al.** Use of Liquid-Crystal Adaptive-Optics to Alter the Refractive State of the Eye. *Optometry and Vision Science,* 01 Juillet 1997, vol. 74 (7), 581-587
- **GUOQIANG LI ; DAVID L. MATHINE ; POURIA VALLEY ; PEKKA AYRAS.** Switchable electro-optic diffractive lens with high efficiency for ophthalmic applications. *O+PNAS,* 18 Avril 2006, vol. 103 (16